# EUROPÄISCHE PATENTSCHRIFT

(11) **EP 3 211 283 B1**
(45) Veröffentlichungstag und Bekanntmachung des Hinweises auf die Patenterteilung: **22.05.2019**
(21) Anmeldenummer: 17156957.7
(22) Anmeldetag: 20.02.2017
(51) Int. Cl.: F16L 33/22, F16L 11/08, F16L 33/30

(54) **SCHLAUCH UND SANITÄRSCHLAUCH MIT EINEM SOLCHEN SCHLAUCH UND EINEM SCHLAUCHANSCHLUSS**
HOSE AND SANITARY HOSE WITH SUCH A HOSE AND A HOSE CONNECTION
TUYAU FLEXIBLE ET TUYAU SANITAIRE COMPRENANT UN TEL TUYAU FLEXIBLE ET UN RACCORD

(30) Priorität: 19.02.2016 DE 202016100900 U
(43) Veröffentlichungstag der Anmeldung: 30.08.2017
(60) Teilanmeldung: 19157285.8
(73) Patentinhaber: Ramspott GmbH & Co. KG, 59909 Bestwig (DE)
(72) Erfinder: Ramspott, Heiner, 59909 Bestwig (DE)
(74) Vertreter: Graefe, Jörg

(56) Entgegenhaltungen:
- DE-A1- 10 051 272
- DE-A1-102010 000 180
- DE-A1-102011 105 075
- DE-U1- 9 218 525
- DE-U1-202013 104 202
- US-A1- 2002 112 770
- US-A1- 2006 006 644
- US-A1- 2006 127 620
- US-A1- 2006 152 006
- US-A1- 2009 211 660
- US-A1- 2011 290 362
- US-A1- 2015 144 219

## Beschreibung

Die vorliegende Erfindung betrifft einen Schlauch und Brauseschlauch mit einem solchen Schlauch und einem Schlauchanschluss mit einem Nippel.

Die US 2011/0290362 offenbart einen Schlauch umfassend einen innersten Schlauch, der aus einem synthetischen Kautschuk ausgebildet sein kann, vier helixförmig gewickelte Verstärkungsschichten sowie Zwischenschichten, die jeweils zwischen zwei Verstärkungsschichten angeordnet sind, und eine Decke, welche die letzte Verstärkungsschicht umgibt. Eine Verstärkungsschicht ist in einer ersten Wickelrichtung helifxförmig gewickelt und die nächste Verstärkungsschicht ist in einer entgegengesetzten Wickelrichtung helixförmig gewickelt. Die Zwischenschichten und die Decke können aus einem synthetischen Kautschuk ausgebildet sein.

Mehrschichtige Sanitärschläuche sind häufig Brauseschläuche. Mehrschichtige Brauseschläuche sind aus dem Stand der Technik bekannt. Die meisten bekannten Sanitärschläuche sind aus PVC hergestellt. PVC hat den Nachteil, dass es nach dem Regelwerk des DVWG nicht mehr für Trinkwasserleitungen verwendet werden darf. Es besteht also der Bedarf Schläuche aus anderen Materialien, die nach dem Regelwerk des DVWG auch für Trinkwasser geeignet sind, herzustellen.

Aus dem Stand der Technik sind zwar auch Sanitärschläuche aus thermoplastischen Elastomeren (TPE) bekannt. Thermoplastische Elastomere haben aber den Nachteil, dass sie insbesondere bei Temperaturen zwischen 50 und 90°C weich werden und beginnen zu fließen. Die Standfestigkeit von bekannten Sanitärschläuchen aus einem TPE ist daher nicht hinreichend praxistauglich.

Der Erfindung lag daher die Aufgabe zugrunde einen Schlauch aus einem thermoplastischen Elastomer vorzuschlagen, der praxistauglich ist.

Dazu schlägt der Erfinder einen Schlauch mit zwei Armierungsschichten und Schichten aus TPE gemäß Anspruch 1 vor.

Durch den Aufbau eines erfindungsgemäßen Schlauches mit den zwei Armierungschichten und den Schichten aus TPE erhält man einen Schlauch der insbesondere im Hinblick auf die Knickfestigkeit und Flexibilität einem bekannten Sanitärschlauch mit einem Außendurchmesser ungefähr zwischen 13,5 und 15,5 mm Außendurchmesser mit Schichten aus PVC nahezu gleichwertig ist. Die Außenschicht kann sich an die ggf. vorhandene zweite Zwischenschicht, eine ggf. vorhandene dritte Zwischenschicht oder die zweite Armierungsschicht anschließen.

Die Außenschicht eines erfindungsgemäßen Schlauches kann transparent sein. Das ist insbesondere sinnvoll, wenn die zweite Armierungsschicht von außen sichtbar sein soll. Es ist auch möglich, dass die Außenschicht transluzent oder opak ist.

Die Außenschicht eines erfindungsgemäßen Schlauches kann gefärbt sein.

Es ist möglich, dass die Außenschicht aus TPE oder PVC oder einem anderen geeigneten Kunststoff besteht.

Gemäß der Erfindung kann zwischen der zweiten Armierungsschicht und der Außenschicht eine zweite Zwischenschicht und ggf. auch noch eine dritte Zwischenschicht aus einem thermoplastischen Elastomer (TPE) angeordnet sein. Insbesondere wenn die Außenschicht transparent oder transluzent ist, kann diese zweite oder die dritte Außenschicht eingefärbt sein. Die Zwischenschicht kann schwarz gefärbt und opak oder nahezu opak sein. Wenigstens eine der Zwischenschichten kann schwarz eingefärbt und opak sein. Dadurch kann eine Lichteinwirkung auf das im Schlauch geführte Medium verhindert werden. Außerdem können durch schwarze Zwischenschichten zusammen mit gefärbten, über den gefärbten Zwischenschichten liegenden Schichten Farbeffekte erzielt werden, die sich auf das äußere Erscheinungsbild des Schlauchs auswirken.

Es ist möglich, dass zwischen der zweiten oder der dritten Zwischenschicht und der Außenschicht eine Dekorschicht aus einer Folienbandwicklung oder einer Folie, insbesondere aus einer Heißprägefolie vorgesehen ist. Ebenso kann auf eine Außenseite der zweiten Zwischenschicht ein Lack oder ein anderer Beschichtungsstoff zum Beispiel auch aus einem Pulver aufgetragen sein. Auch dann ist die Außenschicht vorzugsweise transparent oder transluzent.

Der Innendurchmesser eines erfindungsgemäßen Schlauches kann ca. 7 bis 9 mm, insbesondere 8 bis 8,5 mm betragen, der Außendurchmesser 13,5 mm bis 15,5 mm, insbesondere 13,5 bis 14,5 mm.

Die Innenschicht kann eine Schichtdicke von ca. 0,7 bis 1,5, insbesondere 1 mm haben.

Die erste Zwischenschicht kann eine Schichtdicke von ca. 0,3 bis 0,8, insbesondere ca. 0,5 oder 0,6 mm haben.

Die zweite Zwischenschicht kann eine Schichtdicke von ca. 0,3 bis 0,8, insbesondere ca. 0,5 oder 0,6 mm haben.

Die dritte Zwischenschicht, wenn vorhanden, kann eine Schichtdicke von ca. 0,3 bis 0,8, insbesondere ca. 0,5 oder 0,6 mm haben.

Die Außenschicht hat vorzugsweise eine Schichtdicke von ca. 0,3 bis 0,8, insbesondere ca. 0,5 oder 0,6 mm.

Die Textilfäden, die für die Armierungsschichten verwendet werden, können Fäden mit einer längenbezogenen Masse von maximal 500 dtex, vorzugsweise aber unter 300 dtex, z. B. 280 dtex sein.

Die Fäden einer solchen Armierungsschicht sind so dünn, dass sie von außen kaum oder nicht sichtbar oder nur bei extremer Biegung des Schlauches sichtbar sind. Damit kann ein Schlauch geschaffen werden, der durch eine Armierungsschicht verstärkt ist, ohne dass die Einlage von außen sichtbar ist. Die geringe längenbezogene Masse der Fäden ist dabei deutlich unter der längenbezogenen Masse der Fäden, die bei bekannten Schläuchen bei ca. 550 dtex liegt. Die längenbezogene Masse der Fäden, die für Armierungsschichten von Fäden verwendet werden, ist somit rund halb so groß wie die längenbezogene Masse der Fäden herkömmlicher Schläuche. Die Fäden sind damit dünner und zeichnen sich nicht auf der äußeren Oberfläche der Zwischenschicht und/oder der Außenschicht ab.

Durch ein Erhitzen der Innenschicht vor dem Aufbringen der Fäden kann bei der Herstellung des Schlauches dafür gesorgt werden, dass die Fäden sich in die Oberfläche der Zwischenschicht eindrücken, was einem Abzeichnen der Fäden auf der äußeren Oberfläche der Außenschicht entgegenwirkt.

Bei einem erfindungsgemäßen Schlauch können Fäden verwendet werden, die eine Drehung von 130 Drehungen pro Meter aufweisen.

Die Armierungsschicht eines erfindungsgemäßen Schlauches kann ausschließlich Fäden mit einer längenbezogenen Masse von maximal 130, insbesondere maximal 74 dtex aufweisen. Zwar haben Fäden mit einer längenbezogenen Masse von unter 150 dtex den Nachteil, dass sie sich mitunter schwerer verarbeiten lassen, dafür führen sie in einem erfindungsgemäßen Schlauch zu einer ausreichenden Festigkeit des Schlauches, wenn zwei Armierungsschichten vorhanden sind, wie es erfindungsgemäß vorgesehen ist. Insbesondere Fäden mit einer längenbezogenen Masse von 74 dtex führen zu einer ausreichenden Festigkeit. Ein Vorteil der Fäden mit einer kleinen längenbezogenen Masse ist, dass diese sich nicht nach dem überziehen mit einer einzigen Schicht, z. B. der Außenschicht oder einer Zwischenschicht auf der äußeren Oberfläche der Schicht abzeichnen.

Die Fäden der Armierungsschicht eines erfindungsgemäßen Schlauches können in sich gedreht sein. Die Anzahl der Drehungen kann 130 pro Meter betragen. Eine geringe Drehung (Zwirnung) des Fadens hat gegenüber einer starken Zwirnung den Vorteil, dass der Faden sich flach auf die Oberfläche der Schicht legt, um die er gelegt wird. Auch dadurch kann einem Abzeichnen der Fäden bzw. der Textillage in der äußeren Oberfläche der Zwischenschicht oder der äußeren Oberfläche der Außenschicht entgegen gewirkt werden.

Jeder der Fäden einer Armierungsschicht kann als Wendel um den Innenschlauch gelegt sein. Durch einen Wendel wird gegenüber längs des Schlauches verlaufender Fäden auch die Druckfestigkeit und nicht nur die Zugfestigkeit verbessert. Wenigstens ein Faden ist rechtsgängig gewendelt und wenigstens ein Faden ist linksgängig gewendelt. Durch Wendel in beide Richtungen wird der Neigung eines Schlauches entgegen gewirkt, sich z. B. bei Druckbelastung abhängig von der Richtung der Wendel zu verformen.

Es hat sich gezeigt, dass es von Vorteil ist, mehrere Wendel vorzusehen. So können zum Beispiel bei einem erfindungsgemäßen Schlauch sechs bis 18 Fäden rechtsgängig und sechs bis 18 Fäden linksgängig gewendelt sein.

Der Abstand von zwei rechtsgängigen oder zwei linksgängigen Fäden, in einer Längsrichtung des Schlauches gemessen, kann ca. 1 bis 2 mm betragen.

Gemäß der Erfindung ist es möglich, dass die Fäden der ersten Armierungsschicht dicker sind als die Fäden der zweiten Armierungsschicht.

Die Fäden der ersten Armierungsschicht können eine längenbezogene Masse von 150 dtex bis 1000 dtex, insbesondere 200 bis 600 dtex haben, die Fäden der zweiten Armierungsschicht können eine längenbezogene Masse von weniger als 300 dtex, insbesondere 70 dtex bis 150 dtex haben.

Die Fäden der verschiedenen Armierungsschichten können gleiche längenbezogene Massen haben.

Ferner ist es möglich, dass für die erste Armierungsschicht neun rechtsgängige und neun linksgängige Fäden verwendet werden. Für die zweite Schicht können dann zwölf rechtsgängige und zwölf linksgängige Fäden verwendet werden. Dickere Fäden haben den Vorteil, dass sie für eine höhere Festigkeit sorgen. Der Nachteil ist, dass sie sich leichter auf der Oberfläche einer sie überdeckenden Zwischen- oder Außenschicht abzeichnen. Daher werden dickere Fäden vorteilhaft in der ersten Armierungsschicht verwendet, deren Überdeckung größer ist.

Je nach Bedarf kann der Fachmann, der einen erfindungsgemäßen Schlauch realisieren möchte, für die gewendelten Fäden der Armierungsschichten eine höhere oder geringere Steigung wählen. Eine geringere Steigung hat Vorteile für die Druckfestigkeit des Schlauches. Eine hohe Steigung hat Vorteile für die Zugfestigkeit des Schlauches.

Der Faden oder die Fäden der Armierungsschicht können aus einem Polyesterfaserstoff, zum Beispiel aus PET bestehen.

Der Faden oder die Fäden können aus 24 bis 48 Filamenten (Fasern) mit ca. 2 bis 8 dtex, insbesondere 3 bis 5,7 dtex bestehen.

Typische Schläuche, insbesondere Brauseschläuche können wie folgt aufgebaut sein:

### Beispiel 1:

- Innenschicht: thermoplastisches Elastomer (TPE)
- 1. Armierungsschicht: Gegensinnig gewendelte Textilfäden, je Wicklungssinn mind. 6 Fäden
- 1. Zwischenschicht: thermoplastisches Elastomer (TPE), ggf. eingefärbt, insbesondere schwarz gefärbt,
- 2. Armierungsschicht: Gegensinnig gewendelte Textilfäden, je Wicklungssinn mind. 6 Fäden
- Außenschicht: thermoplastisches Elastomer (TPE), gefärbt

### Beispiel 2:

- Innenschicht: thermoplastisches Elastomer (TPE)
- 1. Armierungsschicht: Gegensinnig gewendelte Textilfäden, je Wicklungssinn mind. 6 Fäden
- 1. Zwischenschicht: thermoplastisches Elastomer (TPE)
- 2. Armierungsschicht: Gegensinnig gewendelte Textilfäden, je Wicklungssinn mind. 6 Fäden
- 2. Zwischenschicht: thermoplastisches Elastomer (TPE), möglicherweise gefärbt
- Ggf. 3. Zwischenschicht: thermoplastisches Elastomer (TPE) oder anderer Kunststoff, gefärbt, insbesondere schwarz gefärbt, oder ungefärbt, transparent, transluzent oder opak
- Außenschicht: thermoplastisches Elastomer (TPE), transparent oder gefärbt

### Beispiel 3:

- Innenschicht: thermoplastisches Elastomer (TPE)
- 1. Armierungsschicht: Gegensinnig gewendelte Textilfäden, je Wicklungssinn mind. 6 Fäden
- 1. Zwischenschicht: thermoplastisches Elastomer (TPE)
- 2. Armierungsschicht: Gegensinnig gewendelte Textilfäden, je Wicklungssinn mind. 6 Fäden
- 2. Zwischenschicht: thermoplastisches Elastomer (TPE), ggf. gefärbt, insbesondere schwarz gefärbt,
- Dekorschicht: Pulverschicht, wendelförmige Folienbandwicklung (chromfarben), Lackschicht oder Folie, zum Beispiel bedampfte Folie oder Heißprägefolie auf der 2. Zwischenschicht
- Außenschicht: thermoplastisches Elastomer (TPE) oder PVC, transparent oder farbig-transluzent, z.B. gelb-transluzent, um einen Goldton zu erzielen,

### Beispiel 4:

- Innenschicht: thermoplastisches Elastomer (TPE)
- 1. Armierungsschicht: Gegensinnig gewendelte Textilfäden, je Wicklungssinn mind. 6 Fäden
- 1. Zwischenschicht: thermoplastisches Elastomer (TPE)
- 2. Armierungsschicht: Gegensinnig Gegenseitig gewendelte Textilfäden, je Wicklungssinn mind. 6 Fäden
- 2. Zwischenschicht: thermoplastisches Elastomer (TPE), möglicherweise gefärbt,
- 3. Zwischenschicht: thermoplastisches Elastomer (TPE), möglicherweise gefärbt, insbesondere schwarz gefärbt,
- Möglicherweise Dekorschicht: Pulverschicht, wendelförmige Folienbandwicklung (chromfarben), Lackschicht oder Folie, zum Beispiel bedampfte Folie oder Heißprägefolie auf der 3. Zwischenschicht
- Außenschicht: thermoplastisches Elastomer (TPE), transparent

Die schwarze Einfärbung der Zwischenschichten kann bei einer darauf zumindest mittelbar folgenden chromfarbenen Schicht den Chromglanz der chromfarbenen Schicht verstärken.

Vorzugsweise ist die schwarz gefärbte Schicht opak oder nahezu opak, um eine Durchdringung des Schlauchs mit Licht von außen zu verhindern oder deutlich einzuschränken. Dadurch kann ggf. das Wachstum von Keimen im Schlauch reduziert oder unterbunden werden.

Es kann von Vorteil sein, wenn ein erfindungsgemäßer Schlauch eine dritte Armierungsschicht hat.

Ebenso ist es möglich, dass eine der Zwischenschichten, die Außenschicht oder die Innenschicht mit Glasfasern oder Kohlefasern oder anderen Fasern oder Materialien verstärkt ist.

Ein erfindungsgemäßer Schlauch kann mit Anschlussmitteln versehen sein und eine Schlauchanordnung bilden, die über die Anschlussmittel an den Enden des Schlauchs mit einer Armatur oder einer Handbrause oder Ähnlichem verbunden werden können.

Wenigstens eines der Anschlussmittel kann einen erfindungsgemäßen Nippel aufweisen, der in das Ende des Schlauches eingesetzt ist.

Das Anschlussmittel einer erfindungsgemäßen Schlauchanordnung kann eine Hülse umfassen, in die das Ende des Schlauches mit dem darin eingesetzten Nippel eingesetzt ist. Der Schlauch ist dann zwischen dem Nippel und der Hülse eingeklemmt. Die durch die Hülse und den Nippel hervorgerufene Klemmung bewirkt, dass die Rippen des Nippels einen innigen Verbund zwischen dem Nippel und dem Schlauch herstellen. Das wird insbesondere auch durch die besondere Gestaltung des Nippels erreicht.

Die Hülse kann eine Länge haben, die kleiner ist als die Länge des gleichförmig kreiszylindrischen Bereichs und des gerippten Bereichs zusammen oder des gerippten Bereichs, falls kein gleichförmig kreiszylindrischen Bereich vorgesehen ist.

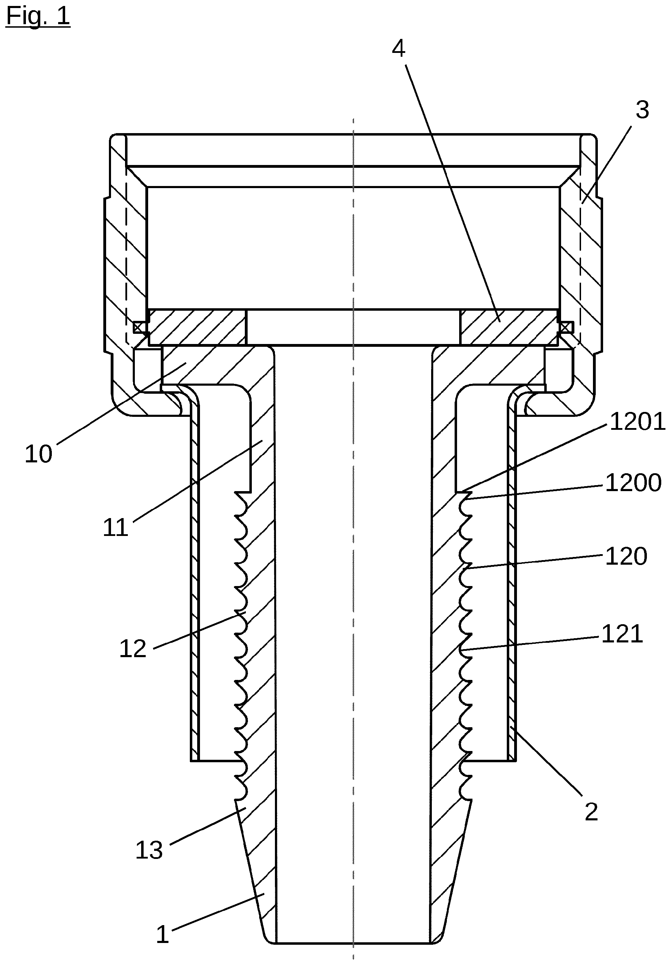

Das Fließen des TPE hat aber nicht nur Auswirkungen auf die Standfestigkeit des Schlauchs allein. Auch die Verbindung des Schlauches mit Armaturen, Handbrausen oder dergleichen ist aufgrund der Fließfähigkeit des TPE nicht ohne weiteres mit den von PVC-Schläuchen bekannten Schlauchanschlüssen zu lösen. Ein solcher Schlauchanschluss ist zum Beispiel aus dem Dokument DE 202 12 169 U1, Fig. 1 und Fig. 6 bekannt. Ein weiterer Schlauchanschluss ist aus dem Dokument DE 92 18 165 U1 bekannt.

Der Erfinder schlägt vor, einen zum Beispiel aus dem Dokument DE 92 18 165 U1 bekannten Nippel für einen Schlauchanschluss für einen Sanitärschlauch, mit einem Kragen, an welchem eine Überwurfmutter anlegbar ist, mit einem sich an den Kragen anschließenden, gleichförmig kreiszylindrischen Bereich und mit einem sich an den kreiszylindrischen Bereich anschließenden gerippten Bereich, dadurch zu verbessern, dass der gleichförmig kreiszylindrische Bereich einen Durchmesser hat, der kleiner ist als der Durchmesser von Rippen in dem gerippten Bereich.

Ein Nippel, mit einem kreiszylindrischen Bereich, der hinter die Rippen zurückspringt, hat gegenüber einem aus dem Dokument DE 92 18 165 U1 bekannten Nippel den Vorteil, dass das Ende des Schlauches, in welchen der Nippel eingebracht ist, nicht so stark durch den Nippel verformt wird. Die Verformung des Endes des Schlauches mit einem Nippel bleibt weit von der Fließgrenze des für den Schlauch verwendeten Materials entfernt. Zugleich wird durch das Vorsehen der Rippen anstelle eines Wulstes auch in einem sich an den gleichförmig kreiszylindrischen Bereich anschließenden Bereich eine bessere Verzahnung des Schlauches bei geringerer Verformung erreicht, was für einen Schlauch aus TPE insbesondere aufgrund seiner schon bei vergleichsweise niedrigen Temperaturen herabgesetzten Fließgrenze besonders von Vorteil ist.

Nach einer weiteren Lösung kann sich bei einem Nippel, der einen gleichförmig kreiszylindrischen Bereich haben kann aber nicht haben muss, an den gerippten Bereich ein konisch geformter Bereich anschließen, der sich von einer Rippe des gerippten Bereichs unterscheidet. Auch bei dem aus dem Dokument DE 92 18 165 U1 bekannten Nippel ist an dem vom Kragen abgewandten freien, in den Schlauch einzubringenden Ende ein konisch geformter Bereich vorgesehen. Dieser Konus wird aber durch eine Rippe gebildet, die genauso geformt ist, wie die übrigen Rippen des gerippten Bereichs. Der konische Bereich eines Nippels unterscheidet sich dagegen von einer Rippe des gerippten Bereichs. Die Rippen des gerippten Bereichs, die übrigens gleich sein können, können insbesondere kleiner sein als der konische Bereich.

Es ist möglich, dass der konische Bereich eines Nippels an einem kragenseitigen Enden einen Durchmesser hat, der dem Durchmesser einer Rippe entspricht.

Der konische Bereich kann an einem kragenabgewandten Ende einen Durchmesser aufweisen, der kleiner ist als der Durchmesser einer Verjüngung zwischen zwei Rippen.

Der konische Bereich kann eine Länge haben, die der Länge von vier bis neun, vorzugsweise von sechs bis sieben Rippen entspricht.

Der konische Bereich kann eine Steigung von 10 bis 14°, insbesondere 12° aufweisen.

Die Rippen des gerippten Bereichs können eine erste Flanke mit einer Steigung von ca. 35° bis 55°, insbesondere 40 bis 50°, vorzugsweise 45° gegenüber einer Mittelachse des Nippels aufweisen.

Eine zweite Flanke kann eine Steigung von ca. 80 bis 100, vorzugsweise von 90° gegenüber der Mittelachse des Nippels aufweisen.

Die Verjüngung zwischen zwei Rippen kann einen Übergang zwischen einer ersten Flanke einer der Rippen und einer zweiten Flanke einer benachbarten der Rippen schaffen, wobei die Verjüngung mit einem Radius gerundet sein kann.

Der gleichförmig kreiszylindrische Bereich kann einen Durchmesser aufweisen, der kleiner ist als der Durchmesser der Verjüngung zwischen den Rippen aber größer als der Durchmesser des konischen Bereichs an seinem kragenabgewandten Ende.

Der gleichförmig kreiszylindrische Bereich eines Nippels kann eine Länge aufweisen, die der Länge von drei bis sechs, vorzugsweise von vier bis fünf Rippen entspricht.

Der gerippte Bereich kann 10 bis 20 Rippen, vorzugsweise 12 oder 13 Rippen aufweisen. Der Abstand der Spitzen der Rippen voneinander kann 0,8 bis 1,8 mm, insbesondere 1,0 bis 1,6 mm, vorzugsweise 1,1 bis 1,2 mm betragen.

An das kragenabgewandte Ende des konischen Bereichs kann sich eine mit einem Radius gerundete Spitze anschließen.

Weitere Merkmale eines Nippel für eine erfindungsgemäße Schlauchanordnungwerden anhand der nachfolgenden Beschreibung eines Ausführungsbeispiels unter Bezugnahme auf die beiliegende Abbildung erläutert. Darin zeigt:
- Fig. 1: einen Schnitt durch ein Anschlussmittel mit einem Nippel.

Das dargestellte Anschlussmittel weist den Nippel 1, eine Hülse 2, eine Dichtung 3 und eine Überwurfmutter 4 auf.

Der Nippel 1 hat einen Kragen 10 an einem Ende. Ein Nippel könnte einen den Kragen überragenden Abschnitt haben, wie er zum Beispiel in der Fig. 1 oder 6 des Dokumentes DE 202 12 169 U1 mit dem Bezugszeichen 33 bezeichnet ist. Ein solcher überragender Abschnitt hat den Vorteil, dass der Nippel auch für eine drehbare und dennoch feste und dichte Verbindung zwischen einer Schlauchanordnung und einer Armatur und einer Handbrause möglich ist, wie er in den Figuren 1 und 6 des genannten Dokumentes gezeigt ist. Weder der Kragen 10 noch das überragende Ende werden in einen Schlauch eingebracht.

An den Kragen 10 des Nippels schließt sich ein gleichförmig, kreiszylindrischer Abschnitt 11 an. Dieser Abschnitt hat einen Durchmesser, der geringfügig größer oder genauso groß wie der Innendurchmesser eines Schlauches ist, in der der Nippel 1 eingebracht wird.

An den gleichförmig, kreiszylindrischen Abschnitt 11 schließt sich ein gerippter Abschnitt 12 an. Dieser Abschnitt 12 weist eine Vielzahl von in Richtung einer Mittelachse des Nippels 1 hintereinanderliegenden Rippen 120 auf. Zwischen zwei Rippen 120 findet sich jeweils eine Verjüngung 121.

Die Rippen 120 sind gleich gestaltet. Jede Rippe hat eine erste Flanke 1200, die in etwa 45° zu der Mittelachse des Nippels 1 geneigt ist, und eine zweite Flanke 1201, die in etwa 90° zu der Mittelachse des Nippels 1 geneigt ist. Die Verjüngung 121 zwischen einer ersten Flanke einer ersten Rippe und einer zweiten Flanke einer benachbarten Rippe ist mit einem Radius gerundet, könnte aber auch anders geformt sein.

Im Bereich der Verjüngung 121 hat der Nippel 1 einen Durchmesser, der größer ist als der Durchmesser des gleichförmig, kreiszylindrischen Bereichs 11, und kleiner ist als an den Spitzen der Rippen 120, oder kurz gesagt an den Rippen.

An den gerippten Bereich 12 schließt sich ein konisch geformter Bereich 13 des Nippels 1 an. Der konische Bereich 13 hat eine Länge zwischen der Länge von sechs bis sieben Rippen 120 entspricht. Seine größte Ausdehnung hat der konische Bereich 13 an seinem kragenseitigen Ende. Der Durchmesser am kragenseitigen Ende des konischen Bereichs 13 entspricht dem Durchmesser der Rippen 120. Zwischen dem kragenseitigen Ende des konischen Bereichs und einer ersten Rippe ist eine Verjüngung 121 wie zwischen zwei Rippen 120 vorgesehen.

An einem kragenfernen Ende des konischen Bereichs 13 des dargestellten Nippels 1 schließt sich ein mit einem Radius abgerundetes Ende an. An dem kragenfernen Ende des konischen Bereichs 13 hat der Nippel 1 einen äußeren Durchmesser, der kleiner ist als der Durchmesser des gleichförmig kreiszylindrischen Bereichs 11.

Nur der Vollständigkeit halber sei erwähnt, dass der Nippel ein zentrales Durchgangsloch aufweist, welches sich durch alle Bereiche des Nippels 1 einschließlich des Kragens 10 entlang der Mittelachse erstreckt.

Der Nippel 1 wird mit dem konischen Bereich 13, dem gerippten Bereich 12 und dem kreiszylindrischen Bereich 11 in einen erfindungsgemäßen Schlauch eingebracht, bis vorzugsweise das Ende des Schlauchs an dem Kragen 10 anliegt.

Die Hülse 2 oder eine Hülse, die einer aus dem Dokument DE 202 12 169 U1, Fig. 1 und 6 bekannten und dort mit dem Bezugszeichen 4 bezeichneten Hülse weitgehend entspricht, wird von außen über den Schlauch gezogen, bis vorzugsweise auch die Hülse an dem Kragen 10 des Nippels 1 anliegt. Das Ende des Schlauches ist dann zwischen dem Nippel 1 und der Hülse 2 eingeklemmt.

Die Hülse und der Nippel 1 einer erfindungsgemäßen Schlauchanordnung können aus Kunststoff hergestellt sein. Die Hülse 2 kann - wie im dargestellten Beispiel - aus Metall hergestellt sein. Mit der an sich bekannten Überwurfmutter 4, die auch lang und konisch ausgeführt sein kann, kann der Schlauch dann an einer Armatur oder einer Handbrause oder dergleichen befestigt werden. Eine Dichtung 3 sorgt dabei für die notwendige Dichtigkeit.

## Patentansprüche

1. Mehrschichtiger Schlauch umfassend von innen nach außen:
- eine Innenschicht aus einem thermoplastischen Elastomer (TPE),
- eine erste Armierungsschicht aus gegensinnig gewendelten Fäden oder Bändern,
- eine erste Zwischenschicht aus einem, insbesondere schwarz gefärbten, thermoplastischen Elastomer (TPE),
- eine zweite Armierungsschicht insbesondere aus gegensinnig gewendelten Fäden oder Bändern, und
- eine Schicht, insbesondere eine zweite Zwischenschicht oder eine Außenschicht, aus einem, insbesondere gefärbten, z. B. schwarz gefärbten, thermoplastischen Elastomer (TPE).

2. Schlauch nach Anspruch 1, **dadurch gekennzeichnet, dass** die Außenschicht transparent ist.

3. Schlauch nach Anspruch 1 oder 2, **dadurch gekennzeichnet, dass** die Außenschicht gefärbt ist.

4. Schlauch nach einem der Ansprüche 1 bis 3, **dadurch gekennzeichnet, dass** zwischen der zweiten Armierungsschicht und der Außenschicht eine zweite Zwischenschicht aus einem, insbesondere schwarz gefärbten, thermoplastischen Elastomer (TPE) angeordnet ist.

5. Schlauch nach Anspruch 4, **dadurch gekennzeichnet, dass** zwischen der zweiten Zwischenschicht und der Außenschicht eine dritte Zwischenschicht aus einem thermoplastischen Elastomer (TPE) angeordnet ist.

6. Schlauch nach einem der Ansprüche 1 bis 5, **dadurch gekennzeichnet, dass** zwischen der zweiten oder dritten Zwischenschicht und der Außenschicht eine Dekorschicht aus einem Pulver, einer Folienbandwicklung, einer Lackschicht oder einer Folie ist.

7. Schlauchanordnung, insbesondere Sanitärschlauch, mit einem Schlauch nach einem der Ansprüche 1 bis 6, **dadurch gekennzeichnet, dass** der Schlauch an seinen Enden Anschlussmittel (1, 2, 3, 4) zur Verbindung mit einer Armatur oder einer Handbrause oder Ähnlichem aufweist.

8. Schlauchanordnung nach Anspruch 7, **dadurch gekennzeichnet, dass** wenigstens eines der Anschlussmittel (1, 2, 3, 4) einen Nippel (1) aufweist, der in das Ende des Schlauches eingesetzt ist, wobei der Nippel (1) mit einem Kragen (10), an welchem zumindest mittelbar eine Überwurfmutter (4) anlegbar ist, einem sich an den Kragen (10) anschließenden gleichförmig kreiszylindrischen Bereich (11) und einen sich an den kreiszylindrischen Bereich (11) anschließenden gerippten Bereich (12) ausgestattet ist.

9. Schlauchanordnung nach Anspruch 7 oder 8, **dadurch gekennzeichnet, dass** wenigstens eines der Anschlussmittel (1, 2, 3, 4) einen Nippel (1) aufweist, der in das Ende des Schlauches eingesetzt ist, wobei der Nippel mit einem Kragen (10), an welchem zumindest mittelbar eine Überwurfmutter (4) anlegbar ist und einem gerippten Bereich (12) ausgestattet ist, wobei sich an den gerippten Bereich (12) ein konisch geformter Bereich (13) anschließt, der sich von einer Rippe (120) des gerippten Bereichs (12) unterscheidet.

10. Schlauchanordnung nach Anspruch 9, **dadurch gekennzeichnet, dass** der konische Bereich (13) an einem kragenseitigen Ende einen Durchmesser hat, der dem Durchmesser einer Rippe (120) entspricht.

11. Schlauchanordnung nach Anspruch 9 oder 10, **dadurch gekennzeichnet, dass** der konische Bereich (13) an einem kragenabgewandten Ende einen Durchmesser hat, der kleiner ist als der Durchmesser einer Verjüngung (121) zwischen zwei Rippen (120).

12. Schlauchanordnung nach einem der Ansprüche 8 bis 11, **dadurch gekennzeichnet, dass** die Verjüngung (121) zwischen zwei Rippen (120) einen Übergang zwischen einer ersten Flanke (1200) einer der Rippen (120) und einer zweiten Flanke (1201) einer benachbarten der Rippen (120) schafft, wobei die Verjüngung (121) mit einem Radius gerundet ist.

13. Schlauchanordnung nach einem der Ansprüche 9 bis 12, **dadurch gekennzeichnet, dass** sich an das kragenabgewandte Ende des konischen Bereichs (13) eine mit einem Radius gerundete Spitze anschließt.

14. Schlauchanordnung nach einem der Ansprüche 8 bis 13, **dadurch gekennzeichnet, dass** das Anschlussmittel eine Hülse (2) umfasst, in die das Ende des Schlauches eingesetzt ist.

15. Schlauchanordnung nach Anspruch 14, **dadurch gekennzeichnet, dass** die Hülse (2) eine Länge hat, die kleiner ist als die Länge
- des gleichförmig kreiszylindrischen Bereichs (11) und des gerippten Bereichs (12) zusammen oder
- des gerippten Bereichs (12), falls kein gleichförmig kreiszylindrischer Bereich (11) vorgesehen ist.

## Claims

1. Multi-layered tube comprising, from inside to outside:
- an inner layer made from a thermoplastic elastomer (TPE),
- a first reinforcement layer made from threads or strips spiralled in opposite directions,
- a first intermediate layer made from an, in particular black coloured, thermoplastic elastomer (TPE),
- a second reinforcement layer in particular made from threads or strips spiralled in opposite directions,
- a layer, in particular a second intermediate layer or an outer layer, made from an, in particular coloured, for example black coloured, thermoplastic elastomer (TPE).

2. Tube according to claim 1, **characterised in that** the outer layer is transparent.

3. Tube according to claim 1 or 2, **characterised in that** the outer layer is coloured.

4. Tube according to one of claims 1 to 3, **characterised in that** a second intermediate layer made from an, in particular black coloured, thermoplastic elastomer (TPE) is arranged between the second reinforcement layer and the outer layer.

5. Tube according to claim 4, **characterised in that** a third intermediate layer made from a thermoplastic elastomer (TPE) is arranged between the second intermediate layer and the outer layer.

6. Tube according to one of claims 1 to 5, **characterised in that** a decorative layer made from a powder, a foil strip winding, a lacquer layer or a foil is between the second or third intermediate layer and the outer layer.

7. Tube arrangement, in particular sanitary tube, having a tube according to one of claims 1 to 6, **characterised in that** the tube has connection means (1, 2, 3, 4) to connect to a fitting or a hand spray or similar at its ends.

8. Tube arrangement according to claim 7, **characterised in that** at least one of the connection means (1, 2, 3, 4) has a nipple (1), which is inserted into the end of the tube, wherein the nipple (1) is equipped with a collar (10) at which a union nut (4) can be put at least indirectly, a uniformly circular cylindrical region (11) connected to the collar (10) and a ribbed region (12) connected to the circular cylindrical region (11).

9. Tube arrangement according to claim 7 or 8, **characterised in that** at least one of the connection means (1, 2, 3, 4) has a nipple (1) which is inserted into the end of the tube, wherein the nipple is equipped with the collar (10) on which a union nut (4) can be put at least indirectly and a ribbed region (12), wherein a conically formed region (13) is connected to the ribbed region (12), said conically formed region forming a rib (120) of the ribbed region (12).

10. Tube arrangement according to claim 9, **characterised in that** the conical region (13) has a diameter at a collar-side end which corresponds to the diameter of a rib (120).

11. Tube arrangement according to claim 9 or 10, **characterised in that** the conical region (13) has a diameter at an end facing away from the collar which is smaller than the diameter of a tapering (121) between two ribs (120).

12. Tube arrangement according to one of claims 8 to 11, **characterised in that** the tapering (121) between two ribs (120) creates a transition between a first flank (1200) of one of the ribs (120) and a second flank (1201) of an adjacent of the ribs (120), wherein the tapering (121) is rounded with a radius.

13. Tube arrangement according to one of claims 9 to 12, **characterised in that** a tip rounded with a radius is connected to the end of the conical region (13) facing away from the collar.

14. Tube arrangement according to one of claims 8 to 13, **characterised in that** the connection means comprise a sleeve (2) in which the end of the tube is inserted.

15. Tube arrangement according to claim 14, **characterised in that** the sleeve (2) has a length which is smaller than the length
- of the uniformly circular cylindrical region (11) and of the ribbed region (12) together or
- of the ribbed region (12) if no uniformly circular cylindrical region (11) is provided.

## Revendications

1. Tuyau flexible multicouche comprenant de l'intérieur vers l'extérieur :
- une couche intérieure composée d'un élastomère thermoplastique (TPE),
- une première couche de renforcement composée de fils ou de bandes spiralés en sens contraire,
- une première couche intermédiaire composée d'un élastomère thermoplastique (TPE), en particulier de couleur noire,
- une deuxième couche de renforcement en particulier composée de fils ou de bandes spiralés en sens inverse, et
- une couche, en particulier une deuxième couche intermédiaire ou une couche extérieure, composée d'un élastomère thermoplastique (TPE) en particulier coloré, par exemple de couleur noire.

2. Tuyau flexible selon la revendication 1, **caractérisé en ce que** la couche extérieure est transparente.

3. Tuyau flexible selon la revendication 1 ou 2, **caractérisé en ce que** la couche extérieure est colorée.

4. Tuyau flexible selon l'une quelconque des revendications 1 à 3, **caractérisé en ce qu'**une deuxième couche intermédiaire composée d'un élastomère thermoplastique (TPE), en particulier de couleur noire, est disposée entre la deuxième couche de renforcement et la couche extérieure.

5. Tuyau flexible selon la revendication 4, **caractérisé en ce qu'**une troisième couche intermédiaire composée d'un élastomère thermoplastique (TPE) est disposée entre la deuxième couche intermédiaire et la couche extérieure.

6. Tuyau flexible selon l'une quelconque des revendications 1 à 5, **caractérisé en ce qu'**une couche décorative composée d'une poudre, d'un enroulement de bande de film, d'une couche de vernis ou d'un film est disposée entre la deuxième ou troisième couche intermédiaire et la couche extérieure.

7. Ensemble de tuyau flexible, en particulier tuyau flexible sanitaire, avec un tuyau flexible selon l'une quelconque des revendications 1 à 6, **caractérisé en ce que** le tuyau flexible présente, au niveau de ses extrémités, des moyens de raccordement (1, 2, 3, 4) destinés à être raccordés à un renforcement ou à une douchette manuelle ou similaire.

8. Ensemble de tuyau flexible selon la revendication 7, **caractérisé en ce qu'**au moins un des moyens de raccordement (1, 2, 3, 4) présente un raccord (1), qui est inséré dans l'extrémité du tuyau flexible, dans lequel le raccord (1) est équipé d'un rebord (10), au niveau duquel au moins indirectement un écrou de raccordement (4) peut être installé, d'une zone cylindrique circulaire (11) de forme identique se raccordant au rebord (10) et d'une zone nervurée (12) se raccordant à la zone cylindrique circulaire (11).

9. Ensemble de tuyau flexible selon la revendication 7 ou 8, **caractérisé en ce qu'**au moins un des moyens de raccordement (1, 2, 3, 4) présente un raccord (1), qui est inséré dans l'extrémité du tuyau flexible, dans lequel le raccord est équipé d'un rebord (10), au niveau duquel au moins indirectement un écrou de raccordement (4) peut être installé, et d'une zone nervurée (12), dans lequel une zone formée de manière conique (13), qui se distingue d'une nervure (120) de la zone nervurée (12), se raccorde à la zone nervurée (12).

10. Ensemble de tuyau flexible selon la revendication 9, **caractérisé en ce que** la zone conique (13) a, au niveau d'une extrémité côté rebord, un diamètre qui correspond au diamètre d'une nervure (120).

11. Ensemble de tuyau flexible selon la revendication 9 ou 10, **caractérisé en ce que** la zone conique (13) a, au niveau d'une extrémité opposée au rebord, un diamètre qui est inférieur au diamètre d'un rétrécissement (121) entre deux nervures (120).

12. Ensemble de tuyau flexible selon l'une quelconque des revendications 8 à 11, **caractérisé en ce que** le rétrécissement (121) entre deux nervures (120) crée une transition entre un premier flanc (1200) d'une des nervures (120) et un deuxième flanc (1201) d'une adjacente des nervures (120), dans lequel le rétrécissement (121) est arrondi avec un rayon donné.

13. Ensemble de tuyau flexible selon l'une quelconque des revendications 9 à 12, **caractérisé en ce qu'**une pointe arrondie avec un rayon donné se raccorde à l'extrémité, opposée au rebord, de la zone conique (13).

14. Ensemble de tuyau flexible selon l'une quelconque des revendications 8 à 13, **caractérisé en ce que** le moyen de raccordement comprend une douille (2), dans laquelle l'extrémité du tuyau flexible est insérée.

15. Ensemble de tuyau flexible selon la revendication 14, **caractérisé en ce que** la douille (2) a une longueur, qui est inférieure à la longueur
- de la zone cylindrique circulaire (11) de forme identique ou de la zone nervurée (12) conjointement, ou
- de la zone nervurée (12), si aucune zone cylindrique circulaire (11) de forme identique n'est prévue.
